(19) Europäisches Patentamt
European Patent Office
Office européen des brevets

(11) **EP 1 589 200 B1**

(12) **EUROPÄISCHE PATENTSCHRIFT**

(45) Veröffentlichungstag und Bekanntmachung des Hinweises auf die Patenterteilung:
**10.01.2018 Patentblatt 2018/02**

(21) Anmeldenummer: **04017107.6**

(22) Anmeldetag: **20.07.2004**

(51) Int Cl.:
*B22F 3/00* (2006.01)    *B32B 5/26* (2006.01)
*F01N 1/24* (2006.01)    *F01N 13/14* (2010.01)
*F16L 59/02* (2006.01)    *G10K 11/168* (2006.01)

(54) **Wärme- und Schalldämmelement**

Heat and sound insulating element

Elémemt d'isolation acoustique et thermique

(84) Benannte Vertragsstaaten:
**AT BE BG CH CY CZ DE DK EE ES FI FR GB GR HU IE IT LI LU MC NL PL PT RO SE SI SK TR**

(30) Priorität: **19.04.2004 DE 102004018810**

(43) Veröffentlichungstag der Anmeldung:
**26.10.2005 Patentblatt 2005/43**

(73) Patentinhaber: **ISOLITE GmbH**
**67063 Ludwigshafen (DE)**

(72) Erfinder:
• **Kroll, Matthias**
**67273 Dackenheim (DE)**

• **Bechtel, Peter**
**69120 Heidelberg (DE)**

(74) Vertreter: **Grünecker Patent- und Rechtsanwälte PartG mbB**
**Leopoldstraße 4**
**80802 München (DE)**

(56) Entgegenhaltungen:
**EP-A- 0 486 427    EP-A- 0 875 371**
**EP-A- 0 916 483    US-A- 4 877 689**

**Beschreibung**

Die Erfindung bezieht sich auf eine thermische und akustische Isolierung.

Die US-A-4 877 689 beschreibt eine Hochtemperatur-Isolierbarriere mit einem Aufbau aus einer Vielzahl von Schichten. Die Isolierbarriere ist speziell auf die Verwendung zur Isolierung der Düsen am Spaceshuttle gegen die sehr hohen thermischen Belastungen ausgebildet, wie sie beim Wiedereintritt in die Erdatmosphäre auftreten. Darüber hinaus soll die Isolierbarriere auch den mechanischen Schwingungen widerstehen, die im Betrieb und durch den hohen Schalldruck oder durch akustische Vibrationen entstehen. Der Schichtaufbau der Isolierbarriere enthält eine äußere, d.h. dem Schall im Inneren der Düse abgewandte und der Hochtemperaturbelastung durch Luftreibung bei Atmosphäreneintritt zugewandte Haut aus einem Drahtsieb aus NiCr. Die innere, d.h. der Schallquelle im Inneren der Düse zugewandte Schicht ist ein SiC-Stoff, der mit einer Schicht des eigentlichen Dämmstoff-Korpus unter Kammerung vernäht ist, um die Fasern auch bei starken Vibrationen im Korpus zu halten; diese Schicht erfüllt somit die Funktion einer Kaschierschicht.

Die EP-A-0 916 483 beschreibt ein Dämmmaterial zum Dämmen einer Rohrleitung, das sowohl körperschalldämmend als auch wärmedämmend wirkt. Die Schalldämmung wird jedoch durch ein speziell ausgewähltes Dämmstoffmaterial für den Korpus erzielt, der aus einem feinzelligen, vorzugsweise physikalisch vernetzten Polyethylenschaum besteht. Wegen der begrenzten Temperaturbelastbarkeit (Brennbarkeit) des Dämmmaterials ist dieses, und zwar an der dem Rohr abgewandten Außenseite, mit einer nicht brennbaren Zwischenschicht aus einem hitzebeständigen, feuerhemmenden, weichen und formbaren Material, beispielsweise einem Faservlies aus Keramik-, Glas- und Mineralfasern oder aus Steinwolle bedeckt. Auf dieser Zwischenschicht ist ein reißfester Überzug gegen mechanische Beanspruchung aufgebracht, der eine mit Folie kaschierte Gitterstruktur umfasst. Über die Porositäten der Schichten ist nichts gesagt.

Die EP-A-0 486 427 beschreibt einen Hitzeschild zur Isolation von Fahrzeugteilen der im Hinblick auf seine erleichterte Entsorgung konzipiert ist. Der Hitzeschild enthält eine schallabsorbierende Wärmedämmschicht, die beidseitig mit einem Schutzbelag abgedeckt ist, der als Kaschierlage wirkt. Dieser Schutzbelag ist an einer Seite durch eine Trägerschicht abgedeckt, die zur Verbesserung des Schallschutzes perforiert ist. Die Trägerschicht besteht aus einem Blech.

DE 100 10 112 A1 zeigt ein hochtemperaturbeständiges Wärme- und Schalldämmmaterial, das aus einem Faserkorpus besteht, der aus hochtemperaturbeständigen Fasern durch Vliesbildung hergestellt wurde, wobei ein pulverförmiges Bindemittelgemisch aus $SiO_2$ sowie einem Kunstharz in das Vlies eingebracht wurde. Das Vlies wurde anschließend kurzzeitig erhitzt, wobei der klebrig werdende Kunstharzanteil des Bindemittels die Fasern mit dem $SiO_2$-Pulver bindet.

Ein weiteres Isoliermaterial zu Wärme- und/oder Schalldämmzwecken ist in der DE 198 15 170 beschrieben. Das Dämmstoffelement enthält einen Faserkorpus aus Mineralfasern, vorzugsweise aus Glas- oder Steinwollfasern, der mit einer Beschichtung versehen ist. Der Korpus wird beim Aufbringen der Beschichtung perforiert, bevorzugt genagelt, wobei die Beschichtung in die Perforationen eingepresst wird. Die Beschichtung ist bevorzugt ein Klebemörtel oder eine Kunststoffdispersion. Die so hergestellt Isolierung ist jedoch primär für thermisch weniger belastete Anwendungszwecke im Bereich von Gebäuden oder dgl. gedacht.

Der Erfindung liegt die Aufgabe zugrunde, eine wirksame thermische und akustische Isolierung bereitzustellen, die sich insbesondere für eine Umgebung mit höherer Temperatur und insbesondere zur Verwendung im Motoren- Turbinen- und/oder Fahrzeugbau eignet.

Die Aufgabe wird durch die im Anspruch 1 angegebenen Merkmale gelöst.

Durch die Kombination eines temperaturbeständigen und schallabsorbierenden Korpus mit einer warmfesten, schallabsorbierenden, porösen Materiallage hat sich überraschenderweise herausgestellt, dass sich das akustische Absorptionsverhalten der Isolierung gegenüber dem reinen Korpus entscheidend verbessern lässt. Gleichzeitig wird die Wärmeabstrahlung weiter verringert, eine höhere Material-Eigendämpfung erreicht, Wärmespannungen reduziert und die Betriebsstandfestigkeit erhöht. Weiterhin ist es möglich, durch Verändern der Porosität die Isolierung gezielt auf die speziellen akustischen Parameter abzustimmen. Die erfindungsgemäße Isolierung eignet sich besonders für eine Anwendung im Motor-, Turbinen- und/oder Fahrzeugbau zum Abschirmen von Abgasanlagen, Turboladern oder dgl.

Bevorzugt besteht der Korpus aus fasrigen Hochtemperaturstoffen, wie sie bislang auch für reine Wärmedämmungen eingesetzt wurden.

Bevorzugt enthält der Korpus biolösliche, Silikat-, $SiO_2$-, $Al_2O_3$-, Al-Kalziumsilikat- und/oder Magnesium-Kalziumsilikat-Fasern allein oder in Kombination miteinander.

Mit diesen Werkstoffen wird eine Temperaturbeständigkeit bis 1200°C und mehr erreicht.

Die poröse, warmfeste, schallabsorbierende Materiallage besteht aus einem wärmebeständigen Metall, wie beispielsweise legiertem Stahl und/oder einem mineralischen Material. Diese Materialien sind einerseits relativ problemlos mit der gewünschten Porosität zu versehen und bieten andererseits sowohl die erforderliche Warmfestigkeit als auch die gewünschte und erforderliche Schallabsorption (Schallschluck-Eigenschaften) .

Besonders bevorzugt besteht die poröse Materiallage aus einem Metallblech, das aus einem versinterten Metallgewebe hergestellt wurde. Derartige versinterte Metalldrahtgewebe sind bislang als Filterelemente eingesetzt worden. Auch die Verwendung für einen Schalldämpfer ist aus der EP 542 124 A1 bekannt. Dort soll das Schalldämmrohr aus gesintertem Metalldrahtgewebe das bislang verwendete, gelochte Schalldämmrohr ersetzen, wobei die Porosität in erster Linie dem Durchtritt der Abgase dient und so eingestellt ist, dass der gewünschte Druckabfall beim Durchgang der Abgase erreicht wird. Darüber hinaus soll das Material auch eine Filter- und Katalysatorwirkung entfalten. Weiterhin wurde festgestellt, dass dieses Metalldrahtgewebe eine hohe schalldämmende Wirkung besitzt. Diese schalldämmende Wirkung kann sich jedoch beim bekannten Schalldämpfer nur quasi als Nebenprodukt entfalten, da die Porosität primär auf den Druckabfall des Abgases abgestimmt werden muss, und somit nicht auf eine Optimierung der Schalldämmwirkung ausgelegt werden kann.

Um die thermomechanische Festigkeit eines insbesondere aus Fasern bestehenden Korpus zu erhöhen, kann dieser mit einer Kaschierlage aus einer bevorzugt porösen, hochwarmfesten, metallischen oder mineralischen Filamentbahn kaschiert werden. Wird die Kaschierlage mit dem Korpus versteppt, so wird eine Kammerung des aus Fasern bestehenden Korpus erreicht, was dessen Festigkeit weiter erhöht.

Zur Verbesserung insbesondere der akustischen Schalldämmung kann der Korpus auch an seiner anderen Seite mit einer zusätzlichen Materiallage versehen werden.

Diese weitere Materiallage kann ebenfalls porös sein, was sich insbesondere dann anbietet, wenn Schall von beiden Seiten auf den Korpus auftrifft.

Diese weitere Materiallage kann zur weiteren qualitativen Verbesserung der Schalldämmung eingesetzt werden, wenn die beiden Materiallagen unterschiedlichen Porositäten aufweisen.

Es ist jedoch auch möglich, die weitere Materiallage aus einem nicht-porösen Material herzustellen, bevorzugt als Metallblech auszubilden. Diese Ausgestaltung ist besonders geeignet für eine einseitige Beschallung, wobei die nicht-poröse Materiallage eine Reflexionswirkung auf den Schall ausübt und somit ebenfalls zur Schalldämmung beiträgt.

Diese Schallreflexion kann auch durch eine nicht-poröse Zwischenlage zwischen einer ersten und einer zweiten Lage des Korpus erreicht werden, was besonders dann wirksam ist, wenn die Zwischenlage aus Metall bzw. einer Metallfolie besteht.

Für eine mechanische Stabilität und eine optimale thermische und akustische Isolierung ist bevorzugt der Korpus mit den verwendeten Lagen fest verbunden.

Die erfindungsgemäße Isolierung kann als bahn- oder mattenförmiges bzw. als Kapsel vorgeformtes Isolationsmaterial in den verschiedenen Ausgestaltungen zum nachträglichen und austauschbaren Isolieren von Bauteilen ausgebildet sein.

Schließlich kann die erfindungsgemäße Isolation auch in das Bauteil integriert werden, wobei bevorzugt ein Faserkorpus an der Wandung des Bauteils befestigt wird und an der der Wandung gegenüberliegenden Seite des Korpus die poröse Materiallage angeordnet wird.

Ausführungsbeispiele der Erfindung werden nachfolgend anhand der Zeichnungen näher erläutert. Es zeigen:

Fig. 1    einen Querschnitt durch ein erstes Ausführungsbeispiel einer erfindungsgemäßen Isolierung,

Fig. 2    einen Querschnitt durch ein weiteres Ausführungsbeispiel der erfindungsgemäßen Isolierung,

Fig. 3    einen Querschnitt durch ein weiteres Ausführungsbeispiel der erfindungsgemäßen Isolierung,

Fig. 4    einen Querschnitt durch ein weiteres Ausführungsbeispiel der erfindungsgemäßen Isolierung, und

Fig. 5    ein weiteres Ausführungsbeispiel einer erfindungsgemäßen Isolierung in perspektivischer Darstellung.

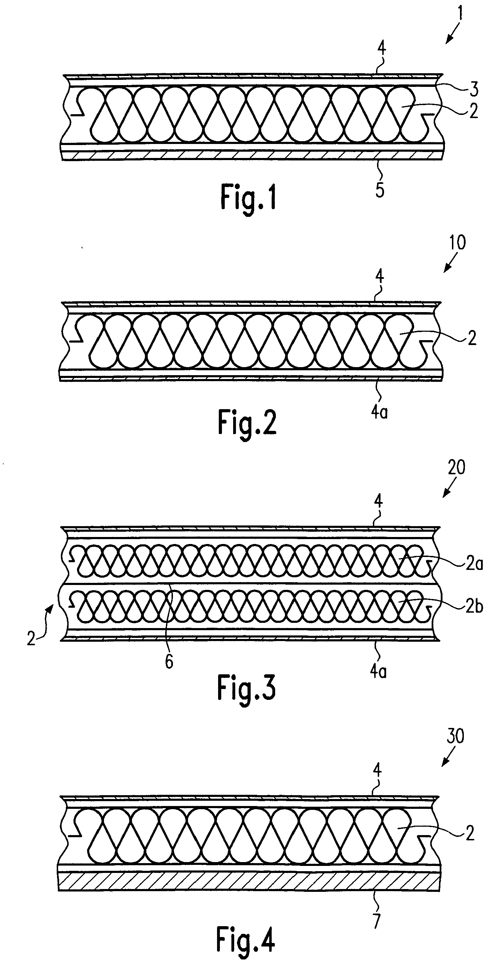

Fig. 1 zeigt einen Querschnitt durch ein erstes Ausführungsbeispiel einer erfindungsgemäßen Isolierung 1, die hier als Isolationsmaterial ausgebildet ist, das nachträglich mit den zu dämmenden Bauteilen kombiniert werden kann. Die Isolierung 1 enthält einen Korpus 2, der im dargestellten Ausführungsbeispiel als Faserkorpus ausgebildet ist. Der Korpus 2 kann jedes geeignete schallabsorbierende oder schallabsorbierend gemachte Dämmmaterial enthalten und enthält bevorzugt fasrige Hochtemperaturstoffe, wie beispielsweise biolösliche Fasern, Silikatfaser, $SiO_2$-Fasern, $Al_2O_3$-Fasern, Al-Kalziumsilikat-Fasern und/oder Magnesium-Kalziumsilikat-Fasern oder dgl. Bevorzugt besteht der Faserkorpus 2 aus Silikatfasern. Der Korpus 2 sollte für einen bevorzugten Anwendungszweck im Turbinen-, Motor- und Fahrzeugbau mit einer Temperaturbeständigkeit von 1200°C und mehr ausgestattet sein. Der Korpus kann in verschiedenen Konfektionierungsarten eingesetzt werden, die sicherstellen, dass Erschütterungen, Vibrationen und im Betrieb auftretende Verformungen die Funktion des Dämm/Absorber-Korpus nicht beeinträchtigen.

Die Dichte des Korpus 2 wird auf die Dämmanforderungen abgestimmt und liegt bei einem Faserkorpus 2 aus Silikatfasern bei etwa 30 - 150 kg/m$^3$. Die Dicke beträgt, bauraumbedingt, bevorzugt zwischen 3 bis 25 mm, oder mehr.

Der Korpus 2 kann zur Erhöhung der thermomechanischen Stabilität an wenigstens einer Seite, bevorzugt allseitig, mit einer Kaschierlage 3 versehen werden, die aus einem hochwarmfesten, metallischen oder mineralischen Mikrodraht- oder Filamentgewebe besteht, das auf den Korpus 2 aufgesteppt wurde. Die Versteppung erfolgt bevorzugt gitterförmig, wodurch gleichzeitig eine Kammerung der Fasern im Korpus 2 erreicht wird, was die thermomechanische Festigkeit weiter erhöht.

Die Kaschierlage 3 kann jedoch auch eine Edelstahlfolie sein, wobei die Edelstahlfolie zweckmäßigerweise nicht versteppt wird.

An einer Seite des Faserkorpus 2 ist eine schallabsorbierende, warmfeste, poröse Materiallage 4 angeordnet und bedeckt den Faserkorpus 2 (einschließlich der ggf. vorgesehenen Kaschierlage 3) zumindest in demjenigen Bereich, der zur Schalldämmung beitragen soll. Die Materiallage 4 besteht bevorzugt aus Metall, eine Herstellung aus Keramik bzw. Keramikfasern ist jedoch auch möglich. Die poröse Materiallage 4 ist bevorzugt ein Metallblech aus einem versinterten Metallgewebe, wie es im Handel als "Poroblech®" oder "Feltmetal®" für Abschirmbleche erhältlich ist. Das Metalldrahtgewebe ist ein- oder mehrlagig und besteht bevorzugt aus einem Porositätsgewebe aus Draht mit einem Durchmesser von etwa 0,1 mm und einem Stützgewebe aus Draht mit einem Durchmesser von 0,1 bis 0,5, bevorzugt 0,42, mm. Die Drähte bestehen aus Stahl, insbesondere einem Chrom-Nickel-Edelstahl.

Die poröse Materiallage 4 kann nicht nur ein Gewebe sondern auch ein Gestrick oder ein Gewirr von Metalldrähten oder Metallfasern enthalten bzw. aus Metallpulver hergestellt sein oder aus Mischungen dieser Materialien bestehen.

Bevorzugt besteht die poröse Materiallage 4 aus einem Sinterblech aus Chromstahl 1.4016/AISI 430, oder 1.4401 ist von 0,3 bis 1,2 mm, bevorzugt 0,7 mm, dick und weist eine Porosität von etwa 25% auf, wobei jedoch die Porosität je nach den zu erwartenden Schallbelastungen (Frequenzbereich) zwischen etwa 10 bis etwa 60 % variiert werden kann.

Die prozentuale Porosität wird berechnet nach folgender Formel:

$$p\%_{Poro} = \frac{\varsigma_M - \varsigma_{Poro}}{\varsigma_M} \times 100$$

Wobei $p\%_{Poro}$ = prozentuale Porosität,

$\varsigma_M$ = Dichte der massiven Platte,

$\varsigma_{Poro}$ = Dichte der porösen Platte.

Auf der der porösen Materiallage 4 gegenüberliegenden Seite ist eine weitere Materiallage 5 am Korpus 2 befestigt. Die weitere Materiallage 5 ist eine nicht-poröse Lage und besteht bevorzugt aus einem Metallblech, insbesondere einem Edelstahlblech.

Auf der der porösen Materiallage 4 gegenüberliegenden Seite ist eine weitere Materiallage 5 am Korpus 2 befestigt. Die weitere Materiallage 5 ist eine nicht-poröse Lage und besteht bevorzugt aus einem Metallblech, insbesondere einem Edelstahlblech.

Die Verbindung der Lagen der Isolierung 1 erfolgt mittels mechanischer Fügeverfahren, wie beispielsweise Durchsetzfügen, Falzen, Nieten, Schrauben oder thermischer Fügeverfahren, wie Widerstandsschweißen oder Schmelzschweißen.

Die Isolierung 1 kann in Form einer Bahn oder Matte vorliegen und an der gewünschten Stelle eingebaut werden. Für größere Abmessungen ist eine Segmentbauweise, insbesondere im Bereich der porösen Materiallage 4 zweckmäßig. Die Isolierung 1 kann jedoch auch als vorgefertigte Kapsel eingesetzt werden, wobei die poröse Materiallage 4, insbesondere wenn sie aus dem versinterten Metallgewebe besteht, bevorzugt in die gewünschte Form tiefgezogen wird.

Der Einbau der Isolierung 1 erfolgt bevorzugt derart, dass die poröse Materiallage 4 der Hauptschallquelle zugewandt ist. Dadurch kann die poröse Materiallage 4 ihre Wirkung als "Schallschlucker" voll entfalten, während eventuell noch hindurchtretender Schall durch die nicht-poröse Materiallage 5, die durch einen durch die Dicke des Korpus 2 bedingten Abstand hinter der Materiallage 4 liegt, reflektiert wird.

Fig. 2 zeigt ein weiteres Ausführungsbeispiel einer Isolierung 10, die sich von der anhand Fig. 1 beschriebenen Isolierung nur durch die nachfolgend beschriebenen Einzelheiten unterscheidet, wobei gleiche bzw. vergleichbare Merkmale mit den gleichen Bezugszeichen gekennzeichnet und nicht nochmals erläutert sind. Die Isolierung 10 unterscheidet sich von der Isolierung 1 dadurch, dass anstelle der weiteren, nicht-porösen Materiallage 5 auch auf der andere Seite eine poröse Materiallage 4a vorgesehen ist, die entweder identisch mit der Materiallage 4 ausgebildet ist oder, bevorzugt, eine abweichende Porosität aufweist. Die Porosität der weiteren porösen Materiallage 4a liegt bevorzugt zwischen 25 % und 42 %, so dass "Schallschluck"-Eigenschaften für unterschiedliche Frequenzen geschaffen werden. Auch eignet sich die Isolierung 10 besonders für Anwendungszwecke, wo Schall beidseitig auftrifft. Es ist jedoch auch möglich, beide Seiten mit einer porösen Materiallage mit identischer Porosität zu versehen.

Fig. 3 zeigt ein weiteres Ausführungsbeispiel einer erfindungsgemäßen Isolierung 20, die sich von der in Fig. 1 beschriebenen Isolierung nur durch die nachfolgenden Merkmale unterscheidet, wobei gleiche bzw. vergleichbare Merkmale mit den gleichen Bezugszeichen gekennzeichnet und nicht nochmals erläutert wurden.

Die Isolierung 20 enthält einen Korpus 2, der zwei Lagen 2a und 2b umfasst, die durch eine Zwischenlage 6 voneinander getrennt sind. Die Zwischenlage 6 ist nicht-porös und besteht bevorzugt aus Metall, insbesondere einer Edelstahlfolie mit einer Dicke von bevorzugt 0,1 bis 1,0 mm oder mehr und einer glatten Oberfläche. Wie im Ausführungsbeispiel gemäß Fig. 2 sind beide Seiten des Korpus 2 mit jeweils einer porösen Materiallage 4 bzw. 4a abgedeckt.

Auch diese Isolierung 20 eignet sich besonders für einen zweiseitigen Schalleinfall, wobei die Zwischenschicht zusätzliche schall- und wärmereflektierende Eigenschaften entfaltet.

Fig. 4 zeigt ein weiteres Ausführungsbeispiel einer erfindungsgemäßen Isolierung 30, die sich von der anhand Fig. 1 beschriebenen Isolierung nur durch die nachfolgenden Einzelheiten unterscheidet, wobei gleiche bzw. vergleichbare Merkmale durch die gleichen Bezugszeichen gekennzeichnet und nicht nochmals erläutert sind. Die Isolierung 30 ist in das zu isolierende Bauteil integriert, d.h. der Korpus 2 ist direkt mit einer Wandung 7 des Bauteils verbunden. Die der Wandung 7 abgewandte Seite des Korpus 2 ist mit der porösen Materiallage 4 abgedeckt. Die Wandung 7 kann beispielsweise ein Heißgasliner in Form einer Edelstahlplatte oder eines Edelstahlrohrs mit einer Dicke von 0.4 bis 3 mm sein.

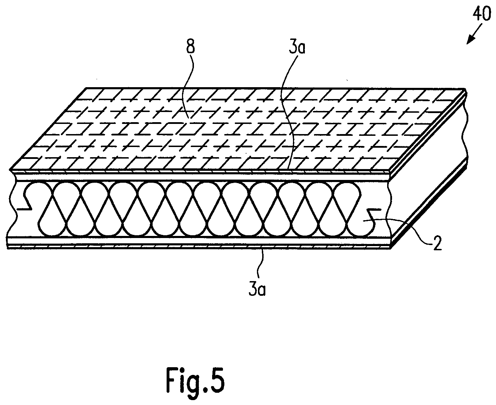

Fig. 5 zeigt eine weitere Isolierung 40, die sich von der anhand Fig. 1 beschriebenen Isolierung durch die nachfolgenden Einzelheiten unterscheidet, wobei gleiche bzw. vergleichbare Bauteile mit den gleichen Bezugszeichen bezeichnet und nicht nochmals erläutert sind. Die Isolierung 40 kann als selbständiges Schall-Isoliermaterial dort eingesetzt werden, wo es auf eine erhöhte Flexibilität und Formanpassung ankommt. Die Isolierung 40 kann jedoch auch, wie dies bereits anhand Fig. 1 beschrieben wurde, als Korpus 2 in einer der Isolierungen 1, 10, 30 oder als eine der Lagen 2a, 2b der Isolierung 20 eingesetzt werden. Wie bereits anhand Fig. 1 beschrieben, besteht die Isolierung 40 aus einem Faserkorpus 2, der beidseitig mit einer porösen, hochwarmfesten, metallischen und schallabsorbierenden Mikrodraht- oder Filamentbahn 3a kaschiert ist. Die Verbindung zwischen den Lagen 2 und 3a erfolgt durch Steppnähte 8, die gitterförmig gelegt sind.

In Abwandlung der beschriebenen und gezeichneten Ausführungsbeispiele kann die Porosität der Materiallagen auf die ganz speziellen Anwendungszwecke abgestimmt werden. Auch die Dicke der Lagen und die verwendeten Werkstoffe bzw. Materialien können an den bestimmten Einsatzzweck eingepasst werden. Auch können Merkmale der einzelnen Figuren untereinander kombiniert und/oder ausgetauscht werden. Auch die Anzahl der verwendeten Lagen kann variiert werden. So ist es beispielsweise ohne weiteres möglich, zwei oder noch mehr poröse Materiallagen, bevorzugt mit unterschiedlicher Porosität, auf ein und derselben Seite des Korpus anzuordnen.

**Patentansprüche**

1. Thermische und akustische Isolierung (1, 10, 20, 30) mit einem temperaturbeständigen und schallabsorbierenden Korpus (2) und einer an wenigstens der nach dem Einbau der Schallquelle zugewandten Seite des Korpus (2) angeordneten, warmfesten, schallabsorbierenden, porösen Materiallage (4, 4a) aus Metalldrahtgewebe; **dadurch gekennzeichnet, dass** das Metalldrahtgewebe aus Chrom-Nickel-Edelstahl ist und eine Porosität zwischen 10 % bis 60 % aufweist.

2. Isolierung nach Anspruch 1, **dadurch gekennzeichnet, dass** der Korpus (2) aus fasrigen Hochtemperaturstoffen besteht.

3. Isolierung nach Anspruch 1 oder 2, **dadurch gekennzeichnet, dass** der Korpus (2) Fasern enthält, die aus der folgenden Gruppe ausgewählt wurden: biolösliche Fasern, Silikatfasern, $SiO_2$-Fasern, $Al_2O_3$-Fasern, Al-Kalziumsilikat-Fasern und/oder Magnesium-Kalziumsilikat-Fasern.

4. Isolierung nach einem der Ansprüche 1 bis 3, **dadurch gekennzeichnet, dass** der Korpus (2) an wenigstens einer Seite mit einer Kaschierlage (3) versehen ist.

5. Isolierung nach Anspruch 4, **dadurch gekennzeichnet, dass** die Kaschierlage (3) eine poröse, hochwarmfeste, metallische oder mineralische Mikrodraht- oder Filamentbahn enthält.

6. Isolierung nach Anspruch 4 oder 5, **dadurch gekennzeichnet, dass** die Kaschierlage (3) mit dem Korpus (2) versteppt ist.

7. Isolierung nach einem der Ansprüche 1 bis 6, **dadurch gekennzeichnet, dass** der Korpus (2) an der der ersten porösen Materiallage (4) abgewandten Seite mit einer warmfesten, weiteren Materiallage (4a, 5) versehen ist.

8. Isolierung nach Anspruch 7, **dadurch gekennzeichnet, dass** die weitere Materiallage (4a) porös ist.

9. Isolierung nach Anspruch 8, **dadurch gekennzeichnet, dass** die weitere Materiallage (4a) eine von der ersten porösen Materiallage (4) abweichende Porosität aufweist.

10. Isolierung nach Anspruch 9, **dadurch gekennzeichnet, dass** die weitere Materiallage (4a) aus einem versinterten Metalldrahtgewebe besteht.

11. Isolierung nach Anspruch 7, **dadurch gekennzeichnet, dass** die weitere Materiallage (5) nicht-porös ist.

12. Isolierung nach Anspruch 11, **dadurch gekennzeichnet, dass** die weitere Materiallage (5) ein Metallblech ist.

13. Isolierung nach einem der Ansprüche 1 bis 12, **dadurch gekennzeichnet, dass** der Korpus (2) wenigstens eine erste und eine zweite Lage (2a, 2b) enthält, die durch eine nicht-poröse Zwischenlage (6) voneinander getrennt sind.

14. Isolierung nach Anspruch 13, **dadurch gekennzeichnet, dass** die Zwischenlage (6) eine Metallfolie enthält.

15. Isolierung nach einem der Ansprüche 1 bis 14, **dadurch gekennzeichnet, dass** der Korpus (2) und die wenigstens eine Lage (4, 4a, 5, 6) fest miteinander verbunden sind.

16. Isolierung nach einem der Ansprüche 1 bis 15, **gekennzeichnet durch** eine Ausgestaltung als Isolationsmaterial (1) mit einem Faser-Korpus (2), einer auf einer Seite des Faser-Korpus (2) befestigten, porösen Materiallage (4) und einem auf der gegenüberliegenden Seite befestigten, nicht-porösem Metallblech (5).

17. Isolierung nach einem der Ansprüche 1 bis 15, **gekennzeichnet durch** eine Ausgestaltung als Isolationsmaterial (10) mit einem Korpus (2) und einer auf beiden Seiten des Korpus (2) befestigten, porösen Materiallage (4, 4a).

18. Isolierung nach einem der Ansprüche 1 bis 15, **gekennzeichnet durch** eine Ausgestaltung als Isolationsmaterial (20) mit einem eine erste und eine zweite Schicht (2a, 2b) enthaltendem Korpus (2), einer zwischen den Schichten (2a, 2b) befestigten Metallfolie (6) und einer auf beiden Seiten des Korpus (2) befestigten, porösen Materiallage (4, 4a).

19. Isolierung nach einem der Ansprüche 1 bis 15, **gekennzeichnet durch** eine in ein Bauteil integrierten Ausgestaltung (30) mit einem an einer Wandung (7) des Bauteils befestigten Korpus (2) und einer an der der Wandung (7) gegenüberliegenden Seite am Korpus (2) befestigten, porösen Materiallage (4).

**Claims**

1. Thermal and acoustical Insulation (1, 10, 20, 30) with a temperature-resistant and sound-absorbing corpus (2) and with a heat-resistant, sound-absorbing, porous material layer (4, 4a) of metal wire mesh, arranged at that side of the corpus (2) facing the sound source after having been installed, **characterized in that** the metal wire mesh is of chrome nickel stainless steel and has a porosity between 10 % to 60 %.

2. Insulation according to claim 1, **characterized in that** the corpus (2) comprises fibrous high temperature materials.

3. Insulation according to claim 1 or 2, **characterized in that** the corpus (2) comprises fibers, selected from the group of: biologically soluble fibers, silicate fibers, $SiO_2$-fibers, $Al_2O_3$-fibers, Al-calcium silicate fibers and/or magnesium-calcium silicate fibers.

4. Insulation according to one of the claims 1 to 3, **characterized in that** at least one side of the corpus (2) is provided with a laminated layer (3).

5. Insulation according to claim 4, **characterized in that** the laminated layer (3) comprises a porous, high temperature resistant, metallic or mineral micro wire or filament sheet.

6. Insulation according to claim 4 or 5, **characterized in that** the laminated layer (3) is stitched to the corpus (2).

7. Insulation according to one of the claims 1 to 6, **characterized in that** the corpus (2) is provided with a heat resistant further material layer (4a, 5) on that side facing away from the first porous material layer (4).

8. Insulation according to claim 7, **characterized in that** the further material layer (4a) is porous.

9. Insulation according to claim 8, **characterized in that** the further material layer (4a) has a porosity which is different from that of the first porous material layer (4).

10. Insulation according to claim 9, **characterized in that** the further material layer (4a) comprises a sintered metal wire mesh.

11. Insulation according to claim 7, **characterized in that** the further material layer (5) is non-porous.

12. Insulation according to claim 11, **characterized in that** the further material layer (5) is a metal sheet.

13. Insulation according to one of the claims 1 to 12, **characterized in that** the corpus (2) comprises at least a first and a second layer (2a, 2b), which are separated by a non-porous intermediate layer (6).

14. Insulation according to claim 13, **characterized in that** the intermediate layer (6) comprises a metal foil.

15. Insulation according to one of the claims 1 to 14, **characterized in that** the corpus (2) and the at least one layer (4, 4a, 5, 6) are connected in a fixed manner.

16. Insulation according to one of the claims 1 to 15, **characterized by** being formed as an insulation material (1) with a fiber corpus (2), a porous material layer (4) attached to one side of the fiber corpus (2) and a non-porous metal sheet (5) attached to the opposite side.

17. Insulation according to one of the claims 1 to 15, **characterized by** being formed as an insulation material (10) with a corpus (2) and a porous material layer (4,4a) attached to both sides of the corpus (2).

18. Insulation according to one of the claims 1 to 15, **characterized by** being formed as an insulation material (20) with a corpus (2) comprising a first and a second layer (2a, 2b), a metal foil (6) fixed between said layers (2a, 2b) and a porous material layer (4, 4a) attached to both sides of the corpus (2).

19. Insulation according to one of the claims 1 to 15, **characterized by** being integrated (30) into a component comprising a corpus (2) attached to a wall (7) of said component and a porous material layer (4) attached to the side of the corpus (2) opposite to said wall (7).


**Revendications**

1. Isolation thermique et acoustique (1, 10, 20, 30) comportant un corps (2) insensible aux variations de température et absorbant le bruit, et une couche de matériau (4, 4a) en tissu de fil métallique, poreuse, absorbant le bruit, résistant à la chaleur et agencée au moins sur le côté du corps (2) dirigé vers la source de bruit après le montage,
**caractérisée en ce que** le tissu de fil métallique est en acier spécial au nickel et au chrome, et présente une porosité entre 10% et 60%.

2. Isolation selon la revendication 1, **caractérisée en ce que** le corps (2) est constitué de matériaux fibreux résistant aux hautes températures.

3. Isolation selon la revendication 1 ou la revendication 2, **caractérisée en ce que** le corps (2) renferme des fibres qui ont été sélectionnées parmi celles du groupe suivant : des fibres bio-solubles, des fibres de silicate, des fibres de $SiO_2$, des fibres d'$Al_2O_3$, des fibres de silicate de calcium-Al et/ou des fibres de silicate de calcium-magnésium.

4. Isolation selon l'une des revendications 1 à 3, **caractérisée en ce que** le corps (2) est muni sur au moins un côté, d'une couche de couverture (3).

5. Isolation selon la revendication 4, **caractérisée en ce que** la couche de couverture (3) renferme une nappe de micro fils ou filaments, métallique ou minérale, résistante aux hautes températures et poreuse.

6. Isolation selon la revendication 4 ou la revendication 5, **caractérisée en ce que** la couche de couverture (3) est piquée sur le corps (2).

7. Isolation selon l'une des revendications 1 à 6, **caractérisée en ce que** le corps (2) est muni, sur le côté opposé à celui où se trouve la première couche de matériau (4) poreuse, d'une autre couche de matériau (4a, 5) résistante à la chaleur.

8. Isolation selon la revendication 7, **caractérisée en ce que** ladite autre couche de matériau (4a) est poreuse.

9. Isolation selon la revendication 8, **caractérisée en ce que** ladite autre couche de matériau (4a) présente une porosité différente de celle de la première couche de matériau (4) poreuse.

10. Isolation selon la revendication 9, **caractérisée en ce que** ladite autre couche de matériau (4a) est constituée d'un tissu de fil métallique fritté.

11. Isolation selon la revendication 7, **caractérisée en ce que** ladite autre couche de matériau (5) est non-poreuse.

12. Isolation selon la revendication 11, **caractérisée en ce que** ladite autre couche de matériau (5) est une tôle de métal.

13. Isolation selon l'une des revendications 1 à 12, **caractérisée en ce que** le corps (2) renferme au moins une première et une deuxième couche (2a, 2b), qui sont séparées l'une de l'autre par une couche intermédiaire (6) non-poreuse.

14. Isolation selon la revendication 13, **caractérisée en ce que** la couche intermédiaire (6) renferme une feuille de métal.

15. Isolation selon l'une des revendications 1 à 14, **caractérisée en ce que** le corps (2) et ladite au moins une couche (4, 4a, 5, 6) sont reliés mutuellement de manière fixe.

16. Isolation selon l'une des revendications 1 à 15, **caractérisée par** une configuration en tant que matériau d'isolation (1) comprenant un corps de fibres (2), une couche de matériau poreuse (4) fixée sur un côté du corps de fibres (2), et une tôle de métal (5) non-poreuse sur le côté opposé.

17. Isolation selon l'une des revendications 1 à 15, **caractérisée par** une configuration en tant que matériau d'isolation (10) comprenant un corps (2) et une couche de matériau poreuse (4, 4a) fixée sur les deux côtés du corps (2).

**18.** Isolation selon l'une des revendications 1 à 15, **caractérisée par** une configuration en tant que matériau d'isolation (20) comprenant un corps (2) renfermant une première et une deuxième couche (2a, 2b), une feuille de métal (6) fixée entre lesdites deux couches (2a, 2b), et une couche de matériau poreuse (4, 4a) fixée sur les deux côtés du corps (2).

**19.** Isolation selon l'une des revendications 1 à 15, **caractérisée par** une configuration (30) intégrée dans une pièce, comprenant un corps (2) fixé sur une paroi (7) de ladite pièce, et une couche de matériau poreuse (4) fixée sur le corps (2) du côté opposé à celui où se trouve la paroi (7).

Fig.1

Fig.2

Fig.3

Fig.4

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4877689 A
- EP 0916483 A
- EP 0486427 A
- DE 10010112 A1
- DE 19815170
- EP 542124 A1